# EUROPEAN PATENT APPLICATION

(11) **EP 4 725 748 A1**
(43) Date of publication of application: **15.04.2026**
(21) Application number: 25206118.9
(22) Date of filing: 01.10.2025
(51) Int. Cl.: B60L 53/122, B60L 53/22, B60L 53/30, B60L 53/36, B60L 53/38, B60L 53/39, H02J 50/12, H02M 3/00, H02M 3/33, H02M 3/335, H02M 7/219, B60L 53/124, B60L 53/126

(54) **WIRELESS CHARGING PAD AND METHOD OF WIRELESS POWER TRANSFER**

(30) Priority: 09.10.2024 US 202463705359 P; 10.09.2025 US 202519324982
(71) Applicant: Tesla, Inc., Austin, TX 78725 (US)
(72) Inventor: ZHENG, Liran, Austin, TX, 78725 (US)
(74) Representative: Zacco Sweden AB

(57) **Abstract**

A wireless charging pad can include a switching circuit, a resonant tank, and an impedance control circuit. The resonant tank can have a resonant frequency and be electrically connected to the switching circuit. The resonant tank can include a coil arranged for wireless power transfer, and a tunable impedance circuit. The impedance control circuit can be configured to adjust an impedance of the tunable impedance circuit to adjust the resonant frequency of the resonant tank.

## Description

### CROSS-REFERENCE TO PRIORITY APPLICATION

This application claims priority to U.S. Provisional Patent Application No. 63/705,359, entitled "TUNABLE IMPEDANCE CIRCUITS FOR WIRELESS CHARGING DEVICE," filed on October 9, 2024 and U.S. Patent Application No. 19/324,982, entitled "TUNABLE IMPEDANCE CIRCUITS FOR WIRELESS CHARGING DEVICE," filed on September 10, 2025, the technical disclosures of which are hereby incorporated by reference in their entirety and for all purposes.

### BACKGROUND

### Technical Field

This disclosure relates to the systems and methods for wireless charging. More specifically, embodiments of this disclosure relate to efficient wireless power transfer between a wireless power transmitter and receiver by adjusting impedance.

### Description of Related Technology

Batteries are components of a wide array of battery-powered devices, equipment, or various transportation platforms, such as electric vehicles, robots, electric bikes, electric motorcycles, drones, and many other types of apparatus. A battery can be paired with a wireless charging device and arranged to receive energy through electromagnetic coupling of a receiver pad with the wireless charging device. Specifically, the wireless charging device can induce electromagnetic fields using one or more internal coils, and one or more corresponding receiver coils connected to the battery can capture these fields within a certain proximity to the charging device. There are a variety of technical challenges associated with wireless charging.

### SUMMARY

The systems, methods and devices of this disclosure each have several innovative embodiments, no single one of which is solely responsible for all of the desirable attributes disclosed herein. Details of one or more implementations of the subject matter described in this specification are set forth in the accompanying drawings and the description below.

In some aspects, the techniques described herein relate to a wireless charging pad including: a switching circuit; a resonant tank having a resonant frequency and being electrically connected to the switching circuit, the resonant tank including a coil arranged for wireless power transfer, and the resonant tank including a tunable impedance circuit; and an impedance control circuit configured to adjust an impedance of the tunable impedance circuit to adjust the resonant frequency of the resonant tank.

In some aspects, the techniques described herein relate to a wireless charging pad, wherein the tunable impedance circuit includes a switch and a capacitor, and the impedance control circuit is configured to adjust the impedance of the tunable impedance circuit by changing a state of the switch.

In some aspects, the techniques described herein relate to a wireless charging pad, wherein the switch is in parallel with the capacitor.

In some aspects, the techniques described herein relate to a wireless charging pad, wherein the switch is in series with the capacitor.

In some aspects, the techniques described herein relate to a wireless charging pad, wherein the tunable impedance circuit includes a plurality of series circuits in parallel with each other, and each of the series circuits includes a switch in series with a capacitor.

In some aspects, the techniques described herein relate to a wireless charging pad, wherein the tunable impedance circuit includes a plurality of parallel circuits in series with each other, and each of the parallel circuits includes a switch in parallel with a capacitor.

In some aspects, the techniques described herein relate to a wireless charging pad, wherein the wireless charging pad is a ground pad.

In some aspects, the techniques described herein relate to a wireless charging pad, wherein the wireless charging pad is a vehicle pad.

In some aspects, the techniques described herein relate to a wireless charging pad, wherein the switching circuit includes an H bridge circuit.

In some aspects, the techniques described herein relate to a wireless charging pad, wherein the switching circuit includes a stacked half bridge circuit.

In some aspects, the techniques described herein relate to a wireless charging pad, wherein the impedance control circuit is configured to adjust the impedance based on a mismatch between the resonant frequency of the resonant tank and a resonant frequency of a second resonant tank circuit of a second wireless charging pad that is positioned in proximity to the wireless charging pad for wireless charging.

In some aspects, the techniques described herein relate to a wireless charging pad, wherein the resonant tank includes a capacitor, and wherein the tunable impedance circuit, the coil, and the capacitor are electrically connected in series.

In some aspects, the techniques described herein relate to a wireless charging pad, wherein the resonant tank includes a capacitor connected with the coil in series, and wherein the tunable impedance circuit and coil are connected in parallel.

In some aspects, the techniques described herein relate to a wireless charging pad, wherein the resonant tank has an LCC architecture, and wherein the tunable impedance circuit is connected in series with an inductor of the resonant tank.

In some aspects, the techniques described herein relate to a wireless charging pad, wherein the resonant tank has an LCC architecture, and wherein the tunable impedance circuit is connected in parallel with an inductor of the resonant tank.

In some aspects, the techniques described herein relate to a wireless charging pad, wherein the tunable impedance circuit and the coil are connected in series.

In some aspects, the techniques described herein relate to a method of wireless power transfer, the method including: detecting a mismatch in resonant frequency between a first resonant tank of a ground pad and a second resonant tank of a vehicle pad; adjusting an impedance of a tunable impedance circuit based on the detecting to reduce the mismatch in resonant frequency; and wirelessly transferring power from the ground pad to the vehicle pad after the adjusting.

In some aspects, the techniques described herein relate to a method, wherein the first resonant tank of the ground pad includes the tunable impedance circuit.

In some aspects, the techniques described herein relate to a method, wherein the second resonant tank of the vehicle includes the tunable impedance circuit.

In some aspects, the techniques described herein relate to a method, wherein the mismatch in resonant frequency is associated with misalignment between the ground pad and the vehicle pad.

In some aspects, the techniques described herein relate to a method, wherein the mismatch in resonant frequency is associated with at least one of a vehicle platform, an object positioned between the ground pad and the vehicle pad, or a manufacturing process.

In some aspects, the techniques described herein relate to a method, wherein the tunable impedance circuit includes a switch and a capacitor, and wherein the adjusting the impedance includes toggling a state of the switch.

In some aspects, the techniques described herein relate to a method, wherein the tunable impedance circuit includes a switch and a capacitor, and the adjusting includes changing a state of the switch.

In some aspects, the techniques described herein relate to a method, wherein the switch is in parallel with the capacitor.

In some aspects, the techniques described herein relate to a method, wherein the switch is in series with the capacitor.

In some aspects, the techniques described herein relate to a method, wherein the tunable impedance circuit includes plurality of series circuits in parallel with each other, and each of the series circuits includes a switch in series with a capacitor.

In some aspects, the techniques described herein relate to a method, wherein the tunable impedance circuit includes plurality of parallel circuits in series with each other, and each of the parallel circuits includes a switch in parallel with a capacitor.

### BRIEF DESCRIPTION OF THE DRAWINGS

These and other features, aspects, and advantages of the disclosure are described with reference to the drawings of certain embodiments. It is to be understood that the accompanying drawings, which are incorporated in and constitute a part of this specification, are for the purpose of illustrating concepts disclosed herein and make not be to scale.
FIG. 1A illustrates an example wireless charging environment in which embodiments of the present disclosure can be implemented.
FIG. 1B is a block diagram illustrating the example wireless charging environment of FIG. 1A in accordance with some embodiments of the present disclosure.
FIG. 1C illustrates a representation of a ground pad that may function as a wireless charging device in accordance with some embodiments of the present disclosure.
FIGS. 2A-2D illustrate example circuit schematic diagrams of wireless charging systems in accordance with some embodiments of the present disclosure.
FIG. 3 illustrates an example block diagram of a wireless charging pad according to some embodiments of the present disclosure.
FIGS. 4A-4D illustrate example switch configurations of a H bridge circuit of the wireless charging pad of FIG. 3 in accordance with some embodiments of the present disclosure.
FIGS. 5A-5E are example circuit schematic diagrams of wireless charging systems with tunable impedance circuits in accordance with some embodiments of the present disclosure.
FIGS. 6A-6E illustrate example circuit schematic diagrams of tunable impedance circuits for wireless charging in accordance with some embodiments of the present disclosure.

### DETAILED DESCRIPTION OF CERTAIN EMBODIMENTS

The following detailed description of certain embodiments presents various descriptions of specific embodiments. However, the innovations described herein can be embodied in a multitude of different ways, for example, as defined and covered by the claims. In this description, reference is made to the drawings where like reference numerals and/or terms can indicate identical or functionally similar elements. It will be understood that elements illustrated in the figures are not necessarily drawn to scale. Moreover, it will be understood that certain embodiments can include more elements than illustrated in a drawing and/or a subset of the elements illustrated in a drawing. Further, some embodiments can incorporate any suitable combination of features from two or more drawings. The headings provided herein are for convenience only and do not necessarily affect the scope or meaning of the claims.

### Introduction

Aspects of the present disclosure relate to systems and methods for wirelessly charging battery packs via a wireless power transfer. The present disclosure discloses a wireless charging device that includes a tunable impedance circuit. The tunable impedance circuit can be specifically designed to adjust an impedance of a wireless power charging system. Illustratively, the tunable impedance circuit can be implemented in the transmitter side and/or the receiver side of the wireless charging system. The tunable impedance circuit can adjust the impedance of the transmitter side and/or the receiver side to efficiently transfer the wireless power.

Generally described, efficient wireless power transfer between a wireless power transmitter and receiver of a wireless charging system can be achieved by reducing a mismatch in resonant frequency between the transmitter and receiver sides. For example, if the resonant frequencies of resonant tanks of the transmitter and receiver of the wireless charging system are mismatched, the wireless power generated at a coil of the transmitter may not be fully (or efficiently) transferred into a coil of the receiver of the wireless charging system. Thus, reducing mismatch between the resonant frequencies of the transmitter and receiver of the wireless charging system can be significant for achieving an efficient wireless power transfer. The resonant frequencies are based on impedances of the transmitter and receiver of the wireless charging system. For example, tuning the impedance of a resonant tank of the transmitter or receiver can change of the resonant frequency of the resonant tank. Tuning the impedance can involve adjusting capacitance and/or inductance of a resonant tank. Since the resonant frequency of the tank circuit can be set based on capacitance and the inductance of the tank circuit, tuning the impedance can shift the resonant frequency of the tank circuit. Maximum power transfer between the transmitter and receiver of the wireless charging system can be achieved when the resonant frequency of the transmitter and receiver is same.

Tunable impedance circuits, as disclosed herein, can adjust resonant frequency of a tank circuit before and/or during a wireless charging process. Illustratively, a wireless charging device can incorporate electrical circuitry that generates an AC signal and a transmitter coil that induces electromagnetic fields. An AC signal can be provided to the transmitting coil at a specific resonant frequency. The resonant frequency can be based on the impedance of a tunable impedance circuit of a resonant tank. Power can be efficiently transferred from the transmitting coil to the receiving coil when the resonant frequencies of tank circuits including these coils are matched. The tunable impedance circuit disclosed herein can adjust the impedance in various wireless charging environments.

In various embodiments, the wireless charging device can be used to charge a vehicle, such as an electric vehicle with a battery pack. In these embodiments, the wireless charging device can be implemented as a ground pad or a vehicle pad. For example, a ground pad may be positioned under a vehicle pad of an electric vehicle to charge the electric vehicle. A wireless charging DC/DC converter (also referred to as an aggregated DC/DC power converter) can include a DC/AC inverter in the ground pad and an AC/DC rectifier in the vehicle pad. Power can be transmitted wirelessly from the ground pad to the vehicle pad. In some embodiments, the vehicle pad can also transmit wireless power by receiving DC signal from the battery pack of the vehicle. For example, the vehicle pad can receive DC signal from the battery pack and convert it into an AC signal by implementing a DC/AC inverter.

Wireless power transfer in the wireless charging system can have technical limitations on its efficiency, such as inductance variation that causes lower efficiency of wireless power transfer between a wireless power transmitting device (e.g., ground pad) and a wireless power receiving device (e.g., vehicle pad). For example, such inductance variation can arise from a variety of factors, such as one or more of misalignment of the charging pad and vehicle, differences in vehicle platforms (sedan, sport utility vehicle, truck, etc.), metal objects such as rebar(s) in the floor or under the ground, manufacturing tolerances, or the like. Such inductance variation can impact resonant frequency on the ground pad (ground side) and/or the vehicle pad (e.g., the vehicle's receiving coil on the vehicle side) can cause a mismatch. This resonant frequency mismatch between the ground pad and vehicle pad can lead to inefficiencies in wireless power transfer by drawing higher current, such that the system draws more current to maintain the same power level, increasing energy consumption. Such resonant frequency mismatch can also lead to larger phase shift. Furthermore, the current waveforms between the charging pad and vehicle pad can also become misaligned, resulting in additional energy consumption and higher power loss. The combination of higher current and phase shift can translate to significant energy consumption. This inefficiency can reduce the overall effectiveness of the wireless charging system. The insufficiency can also drive up costs due to implementing larger and more robust electrical and mechanical components to compensate for the power losses.

Typically, both the wireless charging device (e.g., included in a ground pad) and the vehicle's receiving device (e.g., included in a vehicle pad) incorporate a respective resonant tank with a resonant frequency for the wireless power transfer. Matching the resonant frequency of the resonant tank circuit can lead to efficient wireless power transfer. However, as mentioned above, one or more environmental conditions can cause variations in the resonant frequency on the charging and/or receiving sides. These mismatched resonant frequencies can be a significant contributor to the inefficiencies in wireless power transfer.

To address at least a portion of the above technical problems, embodiments of the present disclosure are related to circuits and methods for mitigating resonant frequency mismatch and/or inductance variation. This can involve reducing mismatch in the resonant frequencies of tank circuits on the ground side (e.g., ground pad) and vehicle side (e.g., vehicle pad). Embodiments of the present disclosure provide various configurations of tunable impedance circuits. These tunable impedance circuits have a variety of switch configurations, capacitor array configurations, locations of switches, and locations of capacitor arrays in wireless charging systems.

The tunable impedance circuit can be implemented in the resonant tank circuitry of the ground pad and/or vehicle pad. The tunable impedance circuit can be connected to a transmit charging coil (e.g., in the ground pad) or a receiving coil (e.g., in the vehicle pad) of a wireless charging system. The tunable impedance circuit can impact the resonant frequency of the resonant tank. Advantageously, the resonant frequency of the resonant tank can be adjusted for various environmental conditions that can result in inductance variations and resonant frequency mismatch.

In some embodiments, the tunable impedance circuit can match the resonant frequency of a resonant tank of the ground pad with the resonant frequency of a resonant tank of the vehicle pad. For example, the tunable impedance circuit can adjust the resonant frequency of the resonant tank of the ground pad to match its resonant frequency with the resonant frequency of the resonant tank of the vehicle pad by controlling one or more switches of the tunable impedance circuit. In various examples disclosed herein, each switch of the tunable impedance circuit can include one or more switches, such as a metal oxide semiconductor field effect transistor (MOSFET).

A tunable impedance circuit can adjust impedance such that a resonant frequency associated with the capacitance and inductance of a tank circuit of a ground pad is approximately equal to a resonant frequency associated with the capacitance and inductance of a tank circuit of a vehicle pad, where the ground pad and the vehicle pad are coupled for wireless charging.

A tunable impedance circuit can be adjusted one time or a plurality of times for a wireless charging cycle. A tunable impedance circuit can be adjusted before a wireless charging cycle. Alternatively or additionally, a tunable impedance circuit can be adjusted during a wireless charging cycle. Such adjustment can be dynamic or periodic. The tunable impedance circuit can be adjusted based on one or more of inductance of a tank circuit, capacitance of the tank circuit, and a coupling coefficient. As one example, the tunable capacitance circuit can be adjusted based on inductance of a tank circuit, capacitance of the tank circuit, and a coupling coefficient. As another example, the tunable capacitance circuit can be adjusted based on inductance of a tank circuit of a ground pad, capacitance of the tank circuit of the ground pad, a coupling coefficient between a ground pad and a vehicle pad, inductance of a tank circuit of the vehicle pad, and capacitance of the tank circuit of the vehicle pad.

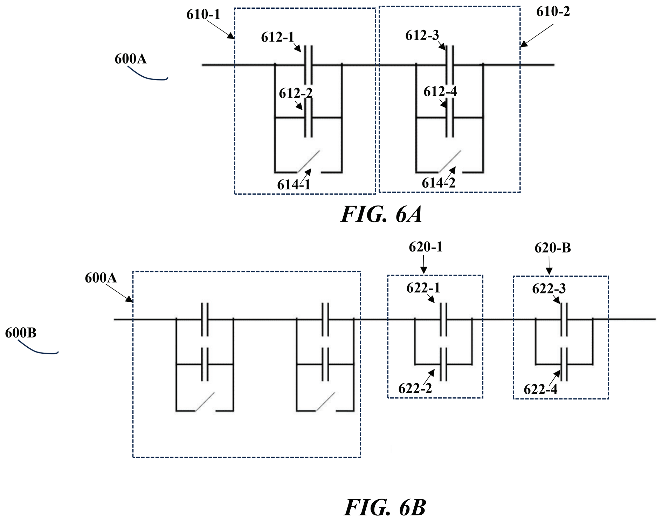

Various tunable impedance circuit configurations that can be implemented in the ground pad and/or the vehicle pad are disclosed. These tunable impedance circuits can be set to various configurations by changing a state of one or more switches to adjust an effective impedance of the tunable impedance circuit. Examples of such configurations are described, for example, in FIGS. 6A-6E.

Although the various aspects will be described in accordance with illustrative embodiments and combinations of features, one skilled in the relevant art will appreciate that the examples and combinations of features are illustrative in nature and should not necessarily be construed as limiting. More specifically, aspects of the present application may be applicable to various types of vehicle charging mechanisms, power sources, interfaces, and the like. Still further, although specific tunable impedance circuit configurations will be described, such illustrative configurations should not necessarily be construed as limiting. Accordingly, one skilled in the relevant art will appreciate that the aspects of the present application are not necessarily limited to application to any particular type of vehicle, vehicle charging infrastructure, communications or illustrative interactions between vehicles, owners/users and wireless battery charging systems.

### Overview of Wireless Charging

Generally described, inductive charging, commonly referred to as wireless charging, is a type of wireless power transfer. Inductive charging uses electromagnetic induction to generate or otherwise provide electricity to devices without requiring physical electrical connectivity. Specifically, various devices can be placed near a charging station or inductive pad without needing to be precisely aligned or make electrical contact, a physical dock, an electric plug, and the like. Such devices include but are not limited to, vehicles, manufacturing equipment, consumer electronics, medical devices, and the like.

**In** accordance with aspects of the present application, inductive charging systems are configured to transfer energy through inductive coupling between components. An illustrative charging system includes a transferring component, which may be configured as a charging station or charging pad. A charging pad for wirelessly transferring power to a vehicle can be referred to as a ground pad. An alternating current (e.g., an input current) from a power source passes through an induction coil in the charging station or pad. Based on the input current, the moving electric charge through the induction coil (e.g., a ground pad coil) creates (or elicits) a magnetic field. Illustratively, the strength of the magnetic field may fluctuate, at least in part, on changes or fluctuations in the input electric current's amplitude. The changing magnetic field creates an alternating electric current in an induction coil on a receiving device (e.g., a vehicle pad coil). The induced alternating current in the receiving device can then pass through a rectifier, converting the induced alternating current to a direct current. Finally, the receiving vehicle can include additional charging components and/or systems that utilize the converted direct current to charge battery systems, provide operating power, or a combination thereof.

Greater distances between the ground pad and vehicle pad coils can be achieved when illustrative inductive charging systems use resonant inductive coupling components/techniques. More specifically, in some embodiments, a capacitor can be connected to each induction coil to create two LC circuits with a specific resonance frequency. The frequency of the alternating current matches the resonance frequency. Additionally, the matched frequency can be further chosen depending on a typical distance between the sending device and the receiver device, with peak efficiency considered. Still further, the use of other materials for the receiver coil, such as silver-plated copper or sometimes aluminum to minimize weight and decrease resistance can be utilized for purposes of energy transfer efficiencies.

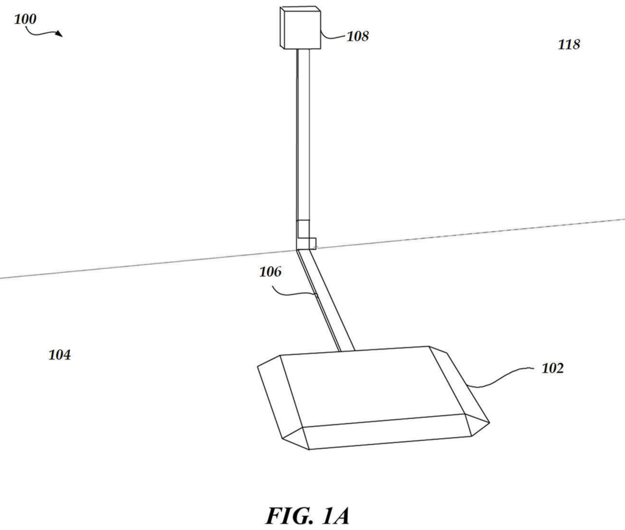

FIG. 1A is a diagram illustrative of an environment 100 for implementing an induction-based wireless charging system in accordance with various aspects of the present application. The environment 100 illustratively can correspond to commercial implementations, such as parking lots, parking stalls, charging booths, and the like. The environment 100 can correspond to private or other non-commercial implementations, such as private residences, etc. By way of an illustrative example, an implementation of an induction-based wireless charging system in a non-commercial implementation can include a ground pad 102 that is configured to generate variable magnetic fields in accordance with an induction charging methodology. As also illustrated in FIG. 1A, the ground pad 102, which can also be referred to as a transmitting component, can correspond to a stand-alone component that may be operable to be mounted or placed on a floor 104 or another planar surface. In some other embodiments, the ground pad 102 can be integrated or combined with other devices or components.

The ground pad 102 may be connected to one or more power sources, such as input from a utility company, real-time power sources (e.g., solar cells or wind energy sources), stored energy cells, or a combination thereof. The power sources are configured to provide the input alternating current as described herein. The ground pad 102 may be connected via direct electric connection 106 to the power source, such as via a junction box 108 located on a wall surface 118.

As illustrated in FIG. 1A, in one embodiment, the ground pad 102 corresponds to a form factor that allows for the location on the floor 104 for wirelessly charging with a vehicle having a vehicle pad coil. The ground pad 102 may have a form factor such that the vehicle may be located directly above a top surface of the ground pad 102. Illustratively, the dimensions of the ground pad 102 (e.g., the height and width of the ground pad 102) may be configured so that a distance between the top surface of the ground pad 102 and a bottom surface of the vehicle meets specific criteria, such as minimum distance between the ground pad coil and vehicle pad coil, maximum distance between the ground pad coil and the vehicle pad coil, and the like. In some embodiments, the vehicle pad and/or ground pad 102 (or combination) may be configured with additional components for adjusting (e.g., statically adjusting and/or dynamically adjusting) such distance or otherwise changing the relative orientation between the ground pad 102 and the vehicle.

In some embodiments, the ground pad 102 can be configured to charge a battery pack of a vehicle, wherein the battery pack can have a nominal voltage of over 200 Volts (e.g., a nominal voltage of about 350 Volts or 355 Volts) and a maximum voltage of 400 Volts. In some embodiments, the ground pad 102 can be configured to supply 800 Volts of direct current power. In some embodiments, the ground pad 102 can supply a voltage range from about 200 Volts to 800 Volts. The ground pad 102 can wirelessly transfer sufficient power to charge battery packs with such voltages.

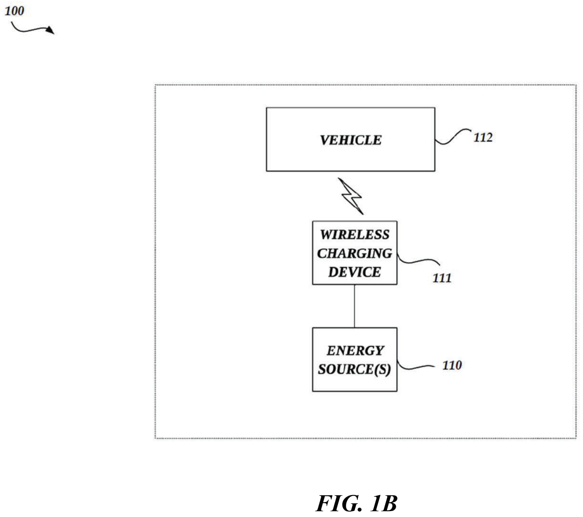

FIG. 1B illustrates a block diagram of the environment 100, including a wireless charging device 111 (e.g., the ground pad 102) in wireless communication with a vehicle 112, such as via induction-based magnetic fields. The wireless charging device 111 is further connected to one or more energy sources 110. Although the wireless charging device 111 is illustrated as having a direct connection to the energy source 110, at least some portion of the input alternating current could be provided via a wireless transmission method. Additionally, in embodiments with multiple power sources, the environment may also include various switching components to cause the selection of energy from individual energy sources 110 or a combination of energy sources 110.

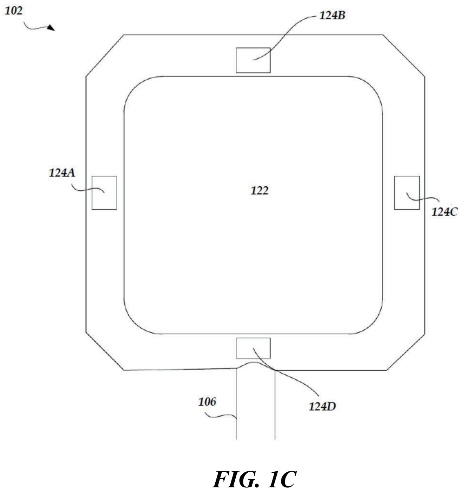

FIG. 1C illustrates a block diagram of a ground pad 102 that may function as a wireless charging device 111 (shown in FIG. 1B). The ground pad 102 can include at least a ground pad coil 122 for causing the generation of magnetic fields from an input current provided from an energy source 110. As illustrated in FIG. 1C, the input current can be provided by a direct electric connection 106.

In some embodiments, the ground pad 102 can also include various sensor components 124A, 124B, 124C, 124D related to the charging process. By way of illustration, the sensor components 124A, 124B, 124C, 124D can be configured for various functions, such as detection of the vehicle 112, detection of objects, measurement of distances to the vehicle, environmental sensors (e.g., temperature sensors, moisture sensors), pressure sensors, and the like. In an embodiment, the sensor components 124A, 124B, 124C, 124D can include radar sensors. The sensor components 124A, 124B, 124C, 124D can include logic and processing components related to the charging process, including operational measurements, operational control, safety measurements, communication components and the like.

### Wireless Charging Systems with H Bridge Circuits

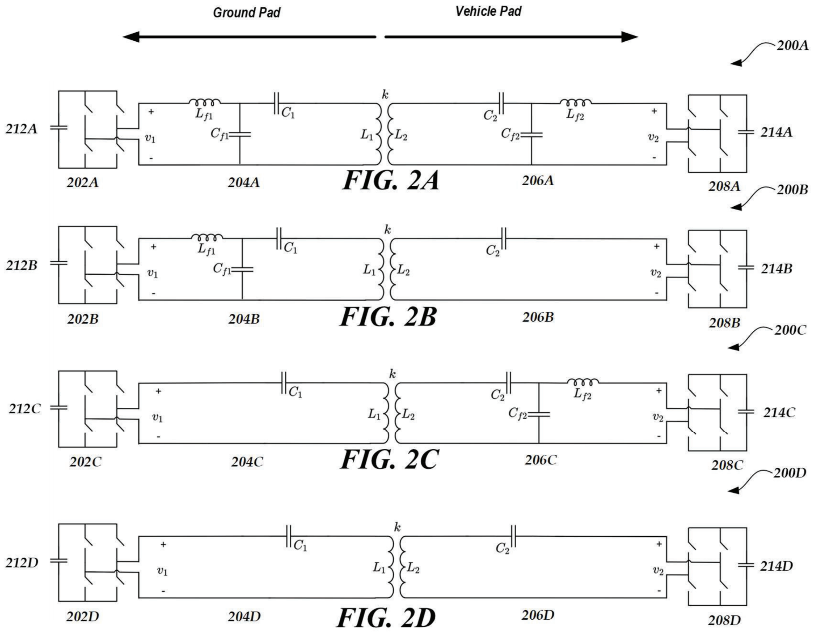

FIGS. 2A-2D illustrate circuit schematic diagrams of example wireless charging systems 200A-200D. As shown in FIGS. 2A-2D, each of the wireless charging systems 200A-200D may include a ground pad (e.g., the ground pad 102) and a vehicle pad that is attached to or otherwise integrated with a vehicle. For example, the ground pad of the wireless charging system 200A may include a capacitor 212A, an H bridge circuit 202A, and a resonant tank 204A as shown in FIG. 2A. A vehicle pad of the wireless charging system 200A may include a capacitor 214A, an H bridge circuit 208A, and a resonant tank 206A, for example, as shown in FIG. 2A. In some embodiments, power may be transferred from a power source (not shown in FIG. 2A) through the H bridge circuit 202A, the resonant tank 204A, the resonant tank 206A, and the H bridge circuit 208A to a battery pack (not shown in FIG. 2A) of a vehicle. This power transfer can include wireless power transfer from a coil L1 of the ground pad to a coil L2 of the vehicle pad. Any of the wireless charging systems 200A-200D can be implemented in accordance with any suitable principles and advantages disclosed herein.

FIG. 2A illustrates a circuit schematic diagram of the wireless charging system 200A. As shown in FIG. 2A, the wireless charging system 200A corresponds to an LCC-LCC circuit architecture. As illustrated, the wireless charging system 200A includes the capacitor 212A, the H bridge circuit 202A, the resonant tank 204A, the resonant tank 206A, the H bridge circuit 208A, and the capacitor 214A. In an LCC-LCC circuit architecture, an inductor L_{f1} and capacitors C_{f1} and C₁ are coupled between the H bridge circuit 202A and the ground pad coil L₁ in the ground pad, and the inductor L_{f2} and capacitors C_{f2} and C₂ are coupled between the H bridge circuit 208A and the vehicle pad coil L₂ in the vehicle pad.

FIG. 2B illustrates a circuit schematic diagram of the wireless charging system 200B. As shown in FIG. 2B, the wireless charging system 200B corresponds to a LCC-Series circuit architecture. As illustrated, the wireless charging system 200B includes the capacitor 212B, the H bridge circuit 202B, the resonant tank 204B, the resonant tank 206B, the H bridge circuit 208B, and the capacitor 214B. In an LCC-series circuit architecture, an inductor L_{f1} and capacitors C_{f1} and C₁ are coupled between the H bridge circuit 202A and the ground pad coil L₁ in the ground pad, and the series capacitor C₂ is coupled between the H bridge circuit 208A and the vehicle pad coil L₂ in the vehicle pad.

FIG. 2C illustrates a circuit schematic diagram of the wireless charging systems 200C. As shown in FIG. 2C, the wireless charging system 200C corresponds to a Series-LCC circuit architecture. As illustrated, the wireless charging system 200C includes the capacitor 212C, the H bridge circuit 202C, the resonant tank 204C, the resonant tank 206C, the H bridge circuit 208C, and the capacitor 214C. In a series-LCC circuit architecture, series capacitor C₁ is coupled between the H bridge circuit 202A and the ground pad coil L₁ in the ground pad, and the inductor L_{f2} and capacitors C_{f2} and C₂ are coupled between the H bridge circuit 208A and the vehicle pad coil L₂ in the vehicle pad.

FIG. 2D illustrates a circuit schematic diagram of the wireless charging systems 200D. As shown in FIG. 2D, the wireless charging system 200D corresponds to a Series-Series circuit architecture. As illustrated, the wireless charging system 200D includes the capacitor 212D, the H bridge circuit 202D, the resonant tank 204D, the resonant tank 206D, the H bridge circuit 208D, and the capacitor 214D. In a series-series circuit architecture, series capacitor C₁ is coupled between the H bridge circuit 202A and the ground pad coil L₁ in the ground pad, and series capacitor C₂ is coupled between the H bridge circuit 208A and the vehicle pad coil L₂ in the vehicle pad.

### Example Wireless Charging Pad

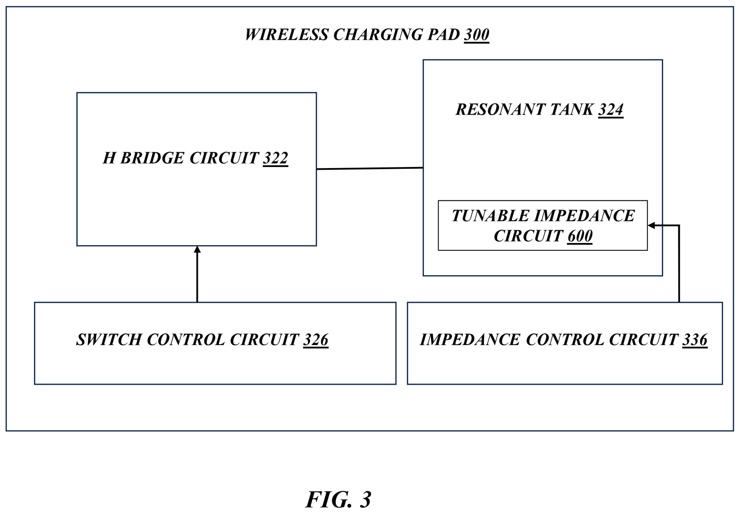

FIG. 3 illustrates an example wireless charging pad 300 in accordance with some embodiments of the present disclosure. The wireless charging pad 300 can include a H bridge circuit 322, a resonant tank 324, a tunable impedance circuit 600, a switch control circuit 326, and an impedance control circuit 336. The tunable impedance circuit 600 can be implemented in the resonant tank 324. The tunable impedance circuit 600 can also be a standalone circuit and can be connected with the resonant tank 324 in accordance with various configurations, for example, as described with respect to FIGS. 6A-6E.

The wireless charging pad 300 can charge battery packs of vehicles under relatively wide voltage ranges through toggling switches of the H bridge circuit 322. The H bridge circuit 322 is an example of a switching circuit that can provide a voltage to the resonant tank 324 for wireless power transfer. Any suitable principles and advantages of the wireless charging pad 300 can be implemented in an environment in accordance with any suitable principles and advantages of FIGS. 1A to 1C.

The wireless charging pad 300 may implement any ground pad or vehicle pad of the wireless charging systems 200A-200D. In some embodiments, the H bridge circuit 322 can correspond to any of the H bridge circuit 202A, H bridge circuit 208A, H bridge circuit 202B, H bridge circuit 208B, H bridge circuit 202C, H bridge circuit 208C, H bridge circuit 202D, and H bridge circuit 208D. The H bridge circuit 322 is an example of a switching circuit. In some other embodiments, any other suitable switching circuit can be implemented in place of the H bridge circuit 322. As one example, a stacked half bridge can be implemented in place of an H bridge circuit in higher voltage applications. The resonant tank 324 can correspond to any of the resonant tank 204A, resonant tank 206A, resonant tank 204B, resonant tank 206B, resonant tank 204C, resonant tank 206C, resonant tank 204D, and resonant tank 206D.

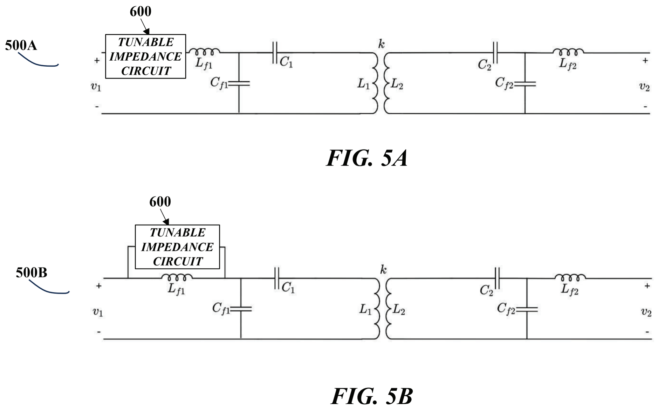

The tunable impedance circuit 600 can be implemented in the resonant tank 324 as shown in below FIGS. 5A-5E. In addition, the tunable impedance circuit 600 can correspond to any configurations shown in below FIGS. 6A-6B. Impedance control circuit 336 may control some of the switches included in the tunable impedance circuit 600 as illustrated in below FIGS. 6A-6E. In some embodiments, the switches of the tunable impedance circuit 600 can be implemented as field effect transistors (FETs), such as metal oxide semiconductor field effect transistors (MOSFETs), and/or mechanical engineering devices, such as mechanical switches, etc. In these embodiments, the impedance control circuit 336 can provide control signals to gates of the transistors. In such instances, the impedance control circuit 336 can be referred to as a gate drive circuit.

The impedance control circuit 336 can generate control signals based on a mismatch in a resonant frequency between a resonant tank 204A-D included in a ground pad and a resonant frequency of a resonant tank 206A-206D included in a vehicle pad. Accordingly, the impedance control circuit 336 can reduce such a mismatch in resonant frequency and increase efficiency in wireless power transfer. In some examples, the control signals can be beyond the matching of the resonant frequency and also depend on one or more of ground pad DC voltages, vehicle pad DC voltages (battery voltages), charging power levels, or coupling coefficient, in addition to the resonant frequency (inductance and capacitance values) on both ground and vehicle sides.

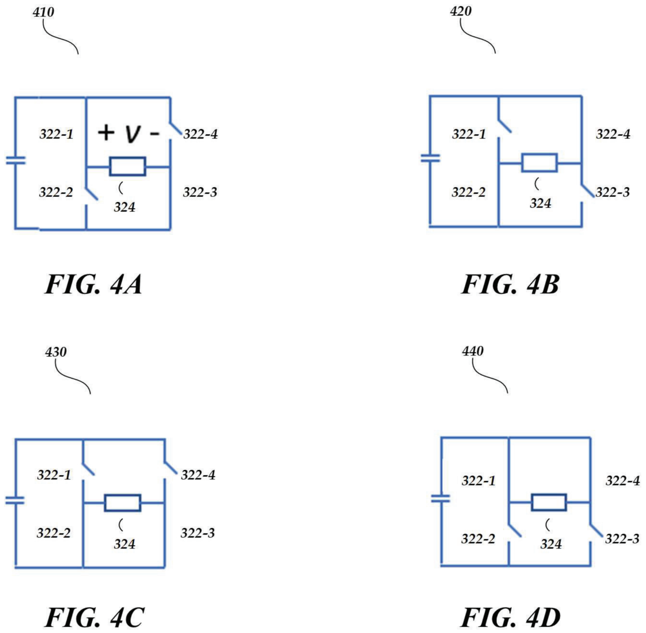

As illustrated in FIGS. 4A-4D, the H bridge circuit 322 may include a switch 322-1, a switch 322-2, a switch 322-3, and a switch 322-4. In some embodiments, rather than periodically switching each of the switch 322-1, switch 322-2, switch 322-3, and switch 322-4, the switch control circuit 326 may control some of the switch 322-1, switch 322-2, switch 322-3, and switch 322-4 to be periodically switched between open and closed states and control some of the switch 322-1, switch 322-2, switch 322-3, and switch 322-4 to remain open or closed without toggling.

The switch control circuit 326 can provide control signals to control the states of the switch of the H bridge circuit 322 (e.g., switches 322-1 to 322-4 of FIGS. 4A to 4D). The switch control circuit 326 can be implemented by any suitable circuitry to control the state of the switches of the H bridge circuit 322. When switches of the H bridge circuit 322 have gates (e.g., the switches are FETs or IGBTs), the switch control circuit 326 can provide control signals to gates of the H bridge. In such instances, the switch control circuit 326 can be referred to as a gate drive circuit.

### Example H Bridge Switch Configurations

FIGS. 4A-4D show example switch configurations of the H bridge circuit 322 that may be controlled by the switch control circuit 326 in accordance with some embodiments of the present disclosure. FIG. 4A shows the H bridge circuit 322 may be configured by the switch control circuit 326 to a switch configuration 410, which can be referred to as a positive configuration. FIG. 4B shows the H bridge circuit 322 may be configured by the switch control circuit 326 to a switch configuration 420, which can be referred to as a negative configuration. FIG. 4C shows the H bridge circuit 322 may be configured by the switch control circuit 326 to a switch configuration 430, which can be referred to as a zero 1 configuration. FIG. 4D shows the H bridge circuit 322 may be configured by the switch control circuit 326 to a switch configuration 440, which can be referred to as a zero 2 configuration.

The H bridge circuit 322 includes four switches switch 322-1 (also referred to as "AP" in the present disclosure), switch 322-2 (also referred to as "AN" in the present disclosure), switch 322-3 (also referred to as "BN" in the present disclosure), and 322-4 (also referred to as "BP" in the present disclosure). These switches can be any suitable switches for power electronics, such as n type field effect transistors arranged to switch sufficient voltage for wireless charging disclosed herein. In certain applications, the H bridge circuit 322 can include metal oxide field effect transistors (MOSFETs). Alternatively or additionally, the H bridge circuit 322 can include insulated-gate bipolar transistors (IGBTs). The H bridge circuit 322 can include a first half bridge and a second half bridge. The first half bridge can include switches 322-1 and 322-2. The second half bridge can include switches 322-3 and 322-4.

As shown in FIG. 4A, in switch configuration 410 (e.g., positive configuration), the switch 322-1 is closed, the switch 322-2 is open, the switch 322-3 is closed, and the switch 322-4 is open. As shown in FIG. 4B, in switch configuration 420 (e.g., negative configuration), the switch 322-1 is open, the switch 322-2 is closed, the switch 322-3 is open, and the switch 322-4 is closed. As shown in FIG. 4C (e.g., zero 1 configuration), in switch configuration 430, the switch 322-1 is open, the switch 322-2 is closed, the switch 322-3 is closed, and the switch 322-4 is open. As shown in FIG. 4D, in switch configuration 440 (e.g., zero 2 configuration), the switch 322-1 is closed, the switch 322-2 is open, the switch 322-3 is open, and the switch 322-4 is closed.

### Examples of Tunable Impedance Circuits in Wireless Charging Pad

FIGS. 5A-5E show five examples of a tunable impedance circuit 600 included in a ground pad of a wireless changing system. As shown in FIGS. 5A-5E, the tunable impedance circuit 600 can be implemented in the resonant tanks 204A - 204D of a ground pad. The tunable impedance circuit 600 can adjust the resonant frequency of a resonant tank 204A-204D by adjusting impedance of the tunable impedance circuit 600. Adjusting impedance of the tunable impedance circuit 600 can involve controlling one or more switches (e.g., one or more switches shown in FIGS. 6A-6E). By adjusting the impedance of the tunable impedance circuit 600, a mismatch between the resonant frequency the tank circuit of a ground pad and tank circuit of a vehicle pad can be reduced.

Adjusting the impedance of the tunable impedance circuit 600 can compensate for variation in inductance between the inductor L1 of the ground pad and the inductor L2 of the vehicle pad. For example, one or more environmental conditions can cause such a variation in inductance. The one or more environmental conditions can include, but are not limited to, misalignment between the ground pad and the vehicle pad. Alternatively or additionally, manufacturing processes can result in differences in impedance between resonant tanks of the ground pad and the vehicle pad.

The tunable impedance circuit 600 of the ground pad can adjust the resonant frequency of a resonant tank of the ground pad to reduce a mismatch with the resonant frequency of a resonant tank of the vehicle pad. Although FIGS. 5A-5E illustrates the tunable impedance circuit 600 implemented in the ground pad, the tunable impedance circuit 600 can alternatively or additionally be implemented in the vehicle pad in a similar manner to implementations on the ground pad. In certain applications, both a ground pad and a vehicle pad can include a respective tunable impedance circuit.

FIG. 5A illustrates an example of a wireless charging system 500A, having an LCC-LCC circuit architecture. As illustrated, the wireless charging system 500A includes a resonant tank that includes the tunable impedance circuit 600 in series with inductor Lf1.

FIG. 5B illustrates an example of a wireless charging system 500B that can be formed based on an LCC-LCC circuit architecture. As shown in FIG. 5B, the tunable impedance circuit 600 can in parallel with inductor Lf1 in the resonant tank.

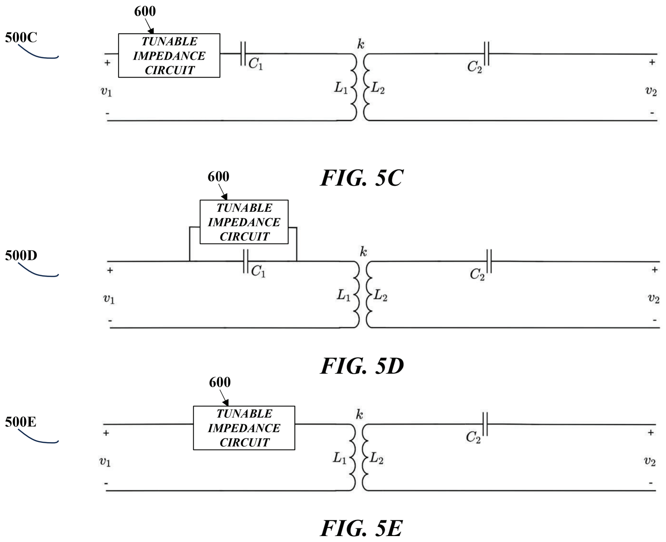

FIG. 5C illustrates an example of a wireless charging system 500C, having a Series-Series circuit architecture. As illustrated, the wireless charging system 500C can include tunable impedance circuit 600 in series with capacitor C1 in the resonant tank.

FIG. 5D illustrates an example of a wireless charging system 500D that can be formed based on the Series-Series circuit architecture. As shown in FIG. 5D, the tunable impedance circuit 600 is in parallel with the capacitor C1 in the resonant tank.

FIG. 5E illustrates an example of a wireless charging system 500E that includes the tunable impedance circuit 600. As illustrated in FIG. 5E, the tunable impedance circuit 600 implements the capacitance of the tank circuit of a ground pad. Such a tunable impedance circuit 600 can be a tunable capacitance circuit. The tank circuit of the ground pad of the wireless changing system 500E does not include any capacitors besides the tunable impedance circuit 600. be directly connected with L1.

The tunable impedance circuit 600 can be implemented in any other suitable architecture, such as but not limited to the LCC-Series circuit architecture 200B (e.g., like shown in FIG. 2B) and the Series-LCC circuit architecture 200C (e.g., like shown in FIG. 2C). For example, in the LCC-Series circuit architecture 200B, the tunable impedance circuit 600 can be implemented similarly to as illustrated in FIGS. 5A and 5B. Furthermore, in the Series-LCC circuit architecture 200C, the tunable impedance circuit 600 can be implemented similarly to as illustrated in FIGS. 5C and 5D.

### Example Tunable Impedance Circuits

A resonant tank in a wireless charging system can include a tunable impedance circuit. The tunable impedance circuit can be any suitable circuit to adjust impedance of the resonant tank to improve performance of the wireless charging system. Example tunable impedance circuits include switched capacitor circuits that include one or more switches to switch in or switch out one or more respective capacitors from an effective impedance of the tunable impedance circuit. Switched capacitor circuits can include any suitable number of switches and any suitable number of capacitors. Switched capacitor circuits can include any suitable series and/or parallel arrangements of one or more capacitors and one or more switches.

FIGS. 6A-6E show examples of tunable impedance circuits 600A - 600E. Without limitation, any one of the tunable impedance circuit configurations 600A - 600E can implement the tunable impedance circuit 600 of any of the wireless charging systems 500A-500E. In some embodiments, the switch control circuit 326 can be coupled with a control terminal of each switch included in tunable impedance circuits 600A-600E and control these switches to adjust the effective impedance of the tunable impedance circuit. For the purpose of description, FIGS. 6A-6E illustrate two switching circuits. However, any suitable principles and advantages of the present disclosure can be applied to three or more witching circuits. In addition, any combination of features of FIGS. 6A-6E can be implemented in tunable impedance circuits.

FIG. 6A shows an example of a tunable impedance circuit 600A. The tunable impedance circuit 600A can include two switching circuits 610-1 and 610-2 connected in series. As illustrated in FIG. 6A, a first switching circuit 610-1 can include a first capacitor 612-1, a second capacitor 612-2, and a switch 614-1 connected in parallel with each other. In addition, a second switching circuit 610-2 can include two capacitors 612-3, 612-4 and a switch 614-2. The two capacitors 612-3, 612-4 and the switch 614-2 are connected in parallel. Each of the capacitance values of the capacitors 612-1 - 612-4 can be determined based on a specific application, and the present disclosure does not limit these values. For example, without limitation, each of the capacitance values of the capacitors 612-1 - 612-4 can be different or one or more capacitors 612-1 - 612-4 can have the same capacitance value.

FIG. 6B shows another example of a tunable impedance circuit 600A. As shown in FIG. 6B, the tunable impedance circuit 600B can include the tunable impedance circuit 600A connected in series with capacitor circuits 620-1, 620-2. In some embodiments, the tunable impedance circuit 600A and the two capacitor circuits 620-1, 620-2 are connected in series with each other. Each of the capacitor circuits 620-1, 620-2 can include two capacitors in parallel with each other. The capacitors 622-1, 622-2 are connected in parallel in the capacitor circuit 620-1. The capacitors 622-3, 622-4 are connected in parallel in the capacitor circuit 620-2. FIG. 6B shows that a tunable impedance circuit can include switched capacitor circuits and fixed capacitors.

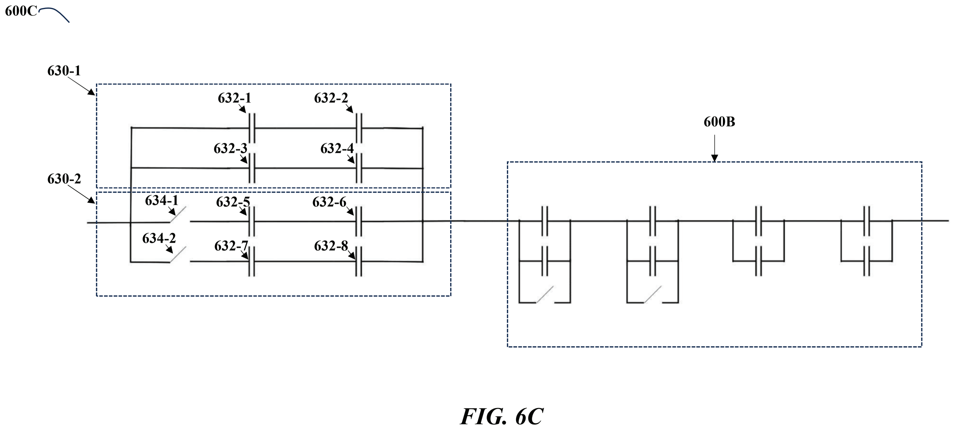

FIG. 6C illustrates an example of a tunable impedance circuit 600C. The tunable impedance circuit 600C includes a hybrid parallel-series and series-parallel switched capacitance array. The tunable impedance circuit 600C includes a fixed capacitance circuit 630-1, a switched capacitance circuit 630-2, and the tunable impedance circuit 600B. As illustrated in FIG. 6C, the fixed capacitance circuit 630-1 and the switched capacitor circuit 630-2 are connected in parallel.

The fixed capacitance circuit 630-1 can include a parallel combination of series capacitors. For example, capacitors 632-1 and 632-2 are in series with each other and in parallel with the series combination of capacitors 632-3 and 632-4. In some embodiments, the fixed capacitance circuit 630-1 can include four capacitors 632-1 - 632-4, and each pair of two capacitors is connected in series, and the two pairs of series capacitors are connected in parallel with each other. For example, the first pair of capacitors 632-1 and 632-2 are connected in series, and the second pair of capacitors 632-3 and 632-4 are connected in series. Then, the first pair of capacitors 632-1, 632-2, and the second pair of capacitors 632-3, 632-4 are connected in parallel, and this parallel connection forms the fixed capacitance circuit 630-1.

The switched capacitor circuit 630-2 can include a plurality of series circuits that include a capacitor in series with a switch, where the series circuits are in parallel with each other. For example, a first series circuit includes a switch 634-1 in series with capacitors 632-5 and 632-6 and a second series circuit includes a switch 634-2 in series with capacitors 632-7 and 632-8. The first series circuit is in parallel with the second series circuit in the switched capacitor circuit 630-2. As illustrated in FIG. 6C, the switched capacitor circuit 630-2 can include four capacitors 632-5 - 632-8 and two switches 634-1 - 634-2. As illustrated, a first group of a switch 634-1, a capacitor 632-5, and a capacitor 632-6 can be connected in series, and a second group of a switch 634-2, a capacitor 632-7, and a capacitor 632-8 can be connected in series. The first group and the second group can be connected in parallel.

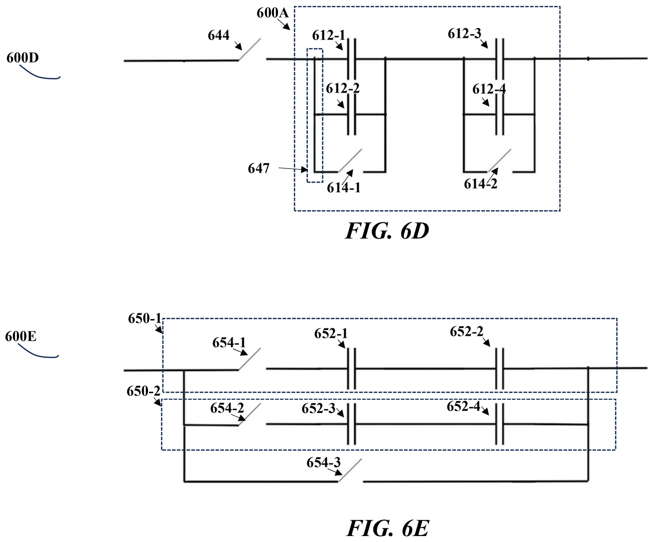

FIG. 6D illustrates an example of a tunable impedance circuit 600D. The tunable impedance circuit 600D can include a switch 644 connected (in series) with the tunable impedance circuit 600A. The tunable impedance circuit 600A includes capacitors 612-1 - 612-4 and switches 614-1 and 614-2. As illustrated, an end of the switch 644 is coupled with first end of the capacitors 612-1, 612-2, and the switch 614-1 at a node 647. The switch 644 can selectively electrically connect or selectively electrically disconnect the tunable impedance circuit 600A from a node.

FIG. 6E illustrates another example of a tunable impedance circuit 600E. As shown in FIG. 6E, the tunable impedance circuit 600E can include four capacitors 652-1 - 652-4 and switches 654-1 - 654-3. In some embodiments, the first switch 654-1, the first capacitor 652-1, and the second capacitor 652-2 can be connected in series and form a first switching group 650-1. The second switch 654-2, the third capacitor 652-3, and the fourth capacitor 652-4 can be connected in series and form a second switching group 650-2. The first switching group 650-1, the second switching group 650-2, and the third switch 654-3 can be connected in parallel with each other.

In some other embodiments, a varactor capacitor can be implemented in place of a switched capacitor circuit that includes a capacitor and a switch. In these embodiments, the switch control circuit 326 can adjust capacitance of the varactor capacitor by applying a bias voltage to the varactor capacitor. Moreover, in some other embodiments, a tunable impedance circuit can tune inductance or a combination of inductance and capacitance.

In some embodiments, various architecture of the tunable impedance circuit can be configured by combining two or more tunable impedance circuits 600A-600E. For example, the tunable impedance circuits 600D and 600E can be connected in series. As another example, tunable impedance circuits 600A and 600C can be connected in series. These examples are provided as illustrative purposes, and the present disclosure is not limited to these examples.

The foregoing disclosure is not intended to limit the present disclosure to the precise forms or particular fields of use disclosed. As such, it is contemplated that various alternate embodiments and/or modifications to the present disclosure, whether explicitly described or implied herein, are possible in light of the disclosure. Having thus described embodiments of the present disclosure, a person of ordinary skill in the art will recognize that changes may be made in form and detail without departing from the scope of the present disclosure. Thus, the present disclosure is limited only by the claims.

It is to be understood that not necessarily all objects or advantages may be achieved in accordance with any particular example described herein. Thus, for example, those skilled in the art will recognize that some examples may be operated in a manner that achieves or optimizes one advantage or group of advantages as taught herein without necessarily achieving other objects or advantages as may be taught or suggested herein.

All of the processes described herein may be embodied in, and fully automated via, software code modules executed by a computing system that includes computers or processors. The code modules may be stored in any type of non-transitory computer-readable medium or other computer storage device. Some or all the methods may be embodied in specialized computer hardware.

Many other variations than those described herein will be apparent from this disclosure. For example, depending on the example, some acts, events, or functions of any of the algorithms described herein can be performed in a different sequence, can be added, merged, or left out altogether (for example, not all described acts or events are necessary for the practice of the algorithms). Moreover, in some examples, acts or events can be performed concurrently, for example, through multi-threaded processing, interrupt processing, or multiple processors or processor cores, or on other parallel architectures, rather than sequentially. In addition, different tasks or processes can be performed by different machines and/or computing systems that can function together.

The various illustrative logical blocks and modules described in connection with the examples disclosed herein can be implemented or performed by a machine, such as a processing unit or processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A processor can be a microprocessor, but in the alternative, the processor can be a controller, microcontroller, or state machine, combination of the same, or the like. A processor can include electrical circuitry to process computer-executable instructions. In some examples, a processor includes an FPGA or other programmable device that performs logic operations without processing computer-executable instructions. A processor can also be implemented as a combination of computing devices, for example, a combination of a DSP and a microprocessor, a plurality of microprocessors, microprocessors in conjunction with a DSP core, or any other such configuration. Although described herein primarily with respect to digital technology, a processor may also include primarily analog components. A computing environment can include any type of computer system, including, but not limited to, a computer system based on a microprocessor, a mainframe computer, a digital signal processor, a portable computing device, a device controller, or a computational engine within an appliance, to name a few.

The elements of a method, process, routine, or algorithm described in connection with the embodiments disclosed herein can be embodied directly in hardware, in a software module executed by a processor device, or in a combination of the two. A software module can reside in RAM memory, flash memory, ROM memory, EPROM memory, EEPROM memory, registers, hard disk, a removable disk, a CD-ROM, or any other form of a non-transitory computer-readable storage medium. An exemplary storage medium can be coupled to the processor device such that the processor device can read information from, and write information to, the storage medium. In the alternative, the storage medium can be integral to the processor device. The processor device and the storage medium can reside in an ASIC. The ASIC can reside in a user terminal. In the alternative, the processor device and the storage medium can reside as discrete components in a user terminal.

The processes described herein or illustrated in the figures of the present disclosure may begin in response to an event, such as on a predetermined or dynamically determined schedule, on demand when initiated by a user or system administrator, or in response to some other event. When such processes are initiated, a set of executable program instructions stored on one or more non-transitory computer-readable media (e.g., hard drive, flash memory, removable media, etc.) may be loaded into memory (e.g., RAM) of a server or other computing device. The executable instructions may then be executed by a hardware-based computer processor of the computing device. In some embodiments, such processes or portions thereof may be implemented on multiple computing devices and/or multiple processors, serially or in parallel.

Conditional language such as, among others, "can," "could," "might" or "may," unless specifically stated otherwise, are otherwise understood within the context as used in general to convey that some examples include, while other examples do not include, some features, elements, and/or steps. Thus, such conditional language is not generally intended to imply that features, elements, and/or steps are in any way for examples or that examples necessarily include logic for deciding, with or without user input or prompting, whether these features, elements and/or steps are included or are to be performed in any particular example.

Disjunctive language such as the phrase "at least one of X, Y, or Z," unless specifically stated otherwise, is otherwise understood with the context as used in general to present that an item, term, etc., may be either X, Y, or Z, or any combination thereof (for example, X, Y, and/or Z). Thus, such disjunctive language is not generally intended to, and should not, imply that some examples require at least one of X, at least one of Y, or at least one of Z to each be present.

Any process descriptions, elements or blocks in the flow diagrams described herein and/or depicted in the attached figures should be understood as potentially representing modules, segments, or portions of code which include executable instructions for implementing specific logical functions or elements in the process. Alternate examples are included within the scope of the examples described herein in which elements or functions may be deleted, executed out of order from that shown, or discussed, including substantially concurrently or in reverse order, depending on the functionality involved as would be understood by those skilled in the art.

It should be emphasized that many variations and modifications may be made to the above-described examples, the elements of which are to be understood as being among other acceptable examples. All such modifications and variations are intended to be included herein within the scope of this disclosure.

Any process descriptions, elements or blocks in the flow diagrams described herein and/or depicted in the attached figures should be understood as potentially representing modules, segments, or portions of code which include executable instructions for implementing specific logical functions or elements in the process. Alternate implementations are included within the scope of the examples described herein in which elements or functions may be deleted, executed out of order from that shown, or discussed, including substantially concurrently or in reverse order, depending on the functionality involved as would be understood by those skilled in the art.

Unless otherwise explicitly stated, articles such as "a" or "an" should generally be interpreted to include one or more described items. Accordingly, phrases such as "a device configured to" are intended to include one or more recited devices. Such one or more recited devices can also be collectively configured to carry out the stated recitations. For example, "a processor configured to carry out recitations A, B, and C" can include a first processor configured to carry out recitation A working in conjunction with a second processor configured to carry out recitations B and C.

## Claims

1. A wireless charging pad comprising:
a switching circuit;
a resonant tank having a resonant frequency and being electrically connected to the switching circuit, the resonant tank comprising a coil arranged for wireless power transfer, and the resonant tank comprising a tunable impedance circuit; and
an impedance control circuit configured to adjust an impedance of the tunable impedance circuit to adjust the resonant frequency of the resonant tank.

2. The wireless charging pad of Claim 1, wherein the tunable impedance circuit comprises a switch and a capacitor, and the impedance control circuit is configured to adjust the impedance of the tunable impedance circuit by changing a state of the switch.

3. The wireless charging pad of Claim 2, wherein the switch is in parallel with the capacitor, or wherein the switch is in series with the capacitor.

4. The wireless charging pad of one of the preceding claims, wherein the tunable impedance circuit comprises a plurality of series circuits in parallel with each other, and each of the series circuits comprises a switch in series with a capacitor, or wherein the tunable impedance circuit comprises a plurality of parallel circuits in series with each other, and each of the parallel circuits comprises a switch in parallel with a capacitor.

5. The wireless charging pad of one of the preceding claims, wherein the wireless charging pad is a ground pad, or wherein the wireless charging pad is a vehicle pad.

6. The wireless charging pad of one of the preceding claims, wherein the switching circuit comprises an H bridge circuit, or wherein the switching circuit comprises a stacked half bridge circuit.

7. The wireless charging pad of one of the preceding claims, wherein the impedance control circuit is configured to adjust the impedance based on a mismatch between the resonant frequency of the resonant tank and a resonant frequency of a second resonant tank circuit of a second wireless charging pad that is positioned in proximity to the wireless charging pad for wireless charging.

8. The wireless charging pad of one of the preceding claims, wherein the resonant tank comprises a capacitor, and wherein the tunable impedance circuit, the coil, and the capacitor are electrically connected in series, or wherein the resonant tank comprises a capacitor connected with the coil in series, and wherein the tunable impedance circuit and coil are connected in parallel.

9. The wireless charging pad of one of the preceding claims, wherein the resonant tank has an LCC architecture, and wherein the tunable impedance circuit is connected in series with an inductor of the resonant tank, or wherein the resonant tank has an LCC architecture, and wherein the tunable impedance circuit is connected in parallel with an inductor of the resonant tank.

10. The wireless charging pad of one of the preceding claims, wherein the tunable impedance circuit and the coil are connected in series.

11. A method of wireless power transfer, the method comprising:
detecting a mismatch in resonant frequency between a first resonant tank of a ground pad and a second resonant tank of a vehicle pad;
adjusting an impedance of a tunable impedance circuit based on the detecting to reduce the mismatch in resonant frequency; and
wirelessly transferring power from the ground pad to the vehicle pad after the adjusting.

12. The method of Claim 11, wherein the first resonant tank of the ground pad comprises the tunable impedance circuit.

13. The method of Claim 11 or 12, wherein the second resonant tank of the vehicle pad comprises the tunable impedance circuit.

14. The method of one of Claims 11 to 13, wherein the mismatch in resonant frequency is associated with misalignment between the ground pad and the vehicle pad.

15. The method of one of Claims 11 to 14, wherein the mismatch in resonant frequency is associated with at least one of a vehicle platform, an object positioned between the ground pad and the vehicle pad, or a manufacturing process.
